# EUROPEAN PATENT SPECIFICATION

(11) **EP 1 048 429 B1**
(45) Date of publication and mention of the grant of the patent: **08.10.2003**
(21) Application number: 00106561.4
(22) Date of filing: 27.03.2000
(51) Int. Cl.: B29C 44/12, B29C 44/58

(54) **Method and apparatus for vacuum foaming of panels**
Verfahren und Vorrichtung zum Aufschäumen unter Vakuum von Paneelen
Méthode et appareil pour le moussage sous vide de panneaux

(30) Priority: 28.04.1999 IT RM990262; 28.04.1999 IT RM990263
(43) Date of publication of application: 02.11.2000
(73) Proprietor: Misa Sud Refrigerazione S.P.A., 00040 Pomezia (RM) (IT)
(72) Inventor: Micheletti, Eduardo, 00191 Roma (RM) (IT); D'Annibale, Vincenzo, 00042 Anzio (RM) (IT)
(74) Representative: Coloberti, Luigi

(56) References cited:
- EP-A- 0 854 025
- WO-A-98/53970
- US-A- 3 878 279

## Description

### BACKGROUND TO THE INVENTION

The present invention relates to a method for vacuum foaming of thermally insulating panels, for example panels for refrigerator rooms or for other applications. The invention is likewise directed to an apparatus for the discontinuous production of thermally insulating panels by the vacuum foaming method referred to above.

### STATE OF THE ART

It is known that a thermally insulating panel substantially comprises two flat or differently shaped outer shells, for example in metal or plastic material, between which a chemically reactive mixture is injected to form an internal layer for example a rigid polyurethane foam, designed to join and thermally insulate the two shells.

In the production of insulating panels it is also possible to follow two different technologies, the first concerning continuous production processes, the second discontinuous production processes by dedicated apparatus.

The continuous processes provide high productivity and quality of the foam, and low labour costs, although they require high investment costs. Contrarily, the discontinuous processes entail low investment costs; however, as they require considerable deployment of labour, also being characterised by low productivity and poor homogeneity of the foam due to the impossibility of distributing the polyurethane mixture evenly on the entire surface of the panel.

In order to partially avoid these problems, it has been varyingly proposed to adopt comb-distributed "openmould" pouring, for example in folding presses or through injection via one or more retractile pipes, as described for example in US-A-4,012,186 and FR-A-2.205.405.

With WO-A-98/26915 and EP-A-0 854 025 it has also been proposed to carry out vacuum foaming using special peripheral frames for defining the panel formation area. It has in fact been noted that, by creating the vacuum inside the cavity of the panel, distribution and rising of the foam are facilitated, obtaining panels of improved quality.

In particular WO-A-98/26915 describes a press for the foaming of individual panels, wherein a first inner frame for containing the foam, which defines the entire perimeter of the panel, is surrounded by a second rectangular frame attached to the upper platen of a press, to define a vacuum chamber containing the panel which can be connected to a vacuum source for suction of the air and gases which develop during the foaming of the panel. In this document it is not specified how the air and the gases can flow from the interior of the panel cavity towards the vacuum chamber, but merely indicates the lack of tightness along the perimeter of the internal frame which surrounds the panel cavity. It has been considered that the bent edges of both shells of the panel would make the passage of air difficult and would hinder its suction. Moreover, since the vacuum chamber surrounds the entire periphery of the internal frame designed to contain the foam in the cavity of the panel, this would not only make injection of the foamable mixture difficult, due to the space existing between the two frames, but would also make distribution of the foam problematical, particularly at the corners of the panel.

In EP-A-0 854 025, upon which the preamble of the independent apparatus claim 5 is based, the use is instead proposed of a special frame for containing the foam, provided with a peripheral channel through which an inert gas can initially be injected into the cavity of the panel in a sufficient quantity for preventing the formation of explosive mixtures, as well as for later forming the vacuum during the foaming phase.

In both cases an apparatus has been substantially proposed for the production of single panels, adopting solutions such as to make automation of the entire production process complex.

In apparatus of the type mentioned above there is also the risk that the passages for suction of air become clogged by the polyurethane mixture when it is still in a liquid state or has not completed the polymerisation phase, and which therefore could flow out the cavity of the panel, polluting the external environment.

There is therefore the need for a production process and an apparatus for discontinuous foaming of thermally insulating panels, functionally and constructionally simple, such as to allow a high automation degree, and which at the same time prevent the escape of harmful gases and foam towards the outside environment.

Another inherent problem in the apparatus of the known type concerns the control of pressure inside the panel.

In vacuum foaming it is important to prevent the generation of pressure oscillations inside the cavity of the panel, particularly at the start and at the end of each foaming phase. Pressure changes can in fact cause uneven distribution of the foam, and hence the production of defective panels or panels with less than perfect quality. All this also influences the physical and mechanical properties of the panels, and in particular can cause the formation of cavities or zones with foam having different density.

### OBJECTS OF THE INVENTION

The general object of the present invention is to provide a method and apparatus for discontinuous vacuum foaming of thermally insulating panels, which allow a high automation degree and which can easily be adapted to the production of panels having different dimensions and thickness.

A further object is to provide a method and apparatus as referred to above, which have a high degree of repeatability of the panel quality, allowing the manufacture of panels having improved physical and mechanical properties.

Yet another object of the present invention is to provide apparatus for discontinuous foaming of insulating panels, by means of which it is possible to control the vacuum conditions inside the panel, particularly at the start and at the end of each foaming phase.

Another object of the present invention is to provide apparatus of the type mentioned above, which in certain respects of self-cleaning type, such as to avoid any escape of foam thanks to a special configuration and arrangement of the means for sucking the air from the foaming cavity of the panels.

Yet another object is to provide apparatus for discontinuous vacuum foaming of insulating panels, in which use is made of a modular division-system of the foaming areas for the panels, which allows the system to be easily adapted to the manufacture of panels of different dimensions, maintaining a high automation degree.

### BRIEF DESCRIPTION OF THE INVENTION

These and other objects according to the invention are achieved by means of a method for the discontinuous vacuum foaming of insulating panels according to claim 1, as well as by means of apparatus according to claim 5.

Preferred embodiments of the above method and apparatus are defined in the dependent claims.

### BRIEF DESCRIPTION OF THE DRAWINGS

The invention will be described in greater detail hereinbelow with reference to the examples of the accompanying drawings, in which:
Fig. 1 is a schematic view of a press according to the invention;
Fig. 2 is a side view of Figure 1, showing only some of the essential parts;
Fig. 3 is a top view of a movable carrier for supporting the panels, along line 3-3 of Figure 2;
Fig. 4 is an enlarged side view of a cross frame member;
Fig. 5 is a view from the above of the frame member of Figure 4;
Fig. 6 is a further enlarged detail of the frame member of Figure 4 at the air passages;
Fig. 7 is a top view of Figure 6;
Fig. 8 is an enlarged cross sectional view according to line 8-8 of Figure 3;
Fig. 9 shows the closure device for the injection hole;
Figs. 10 to 15 show the sequence of the main operative steps of the closure device of Figure 9.

### DETAILED DESCRIPTION OF THE INVENTION

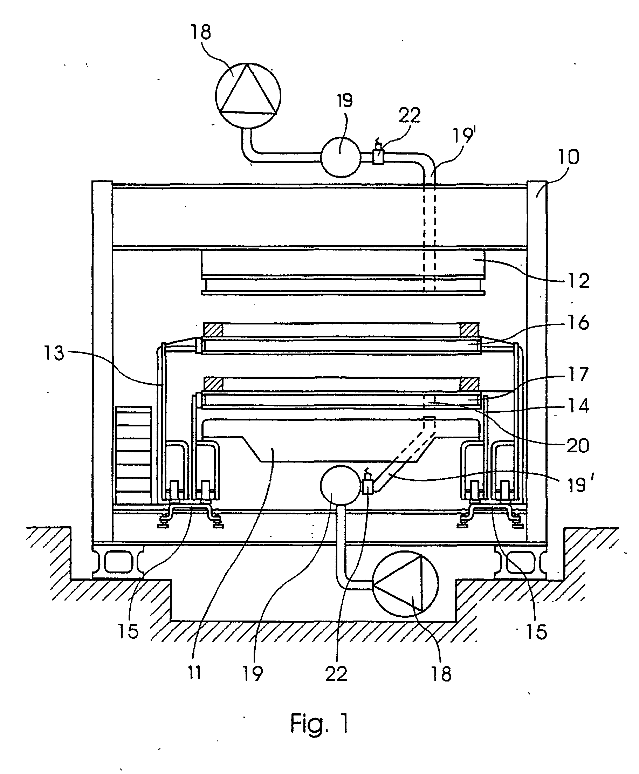

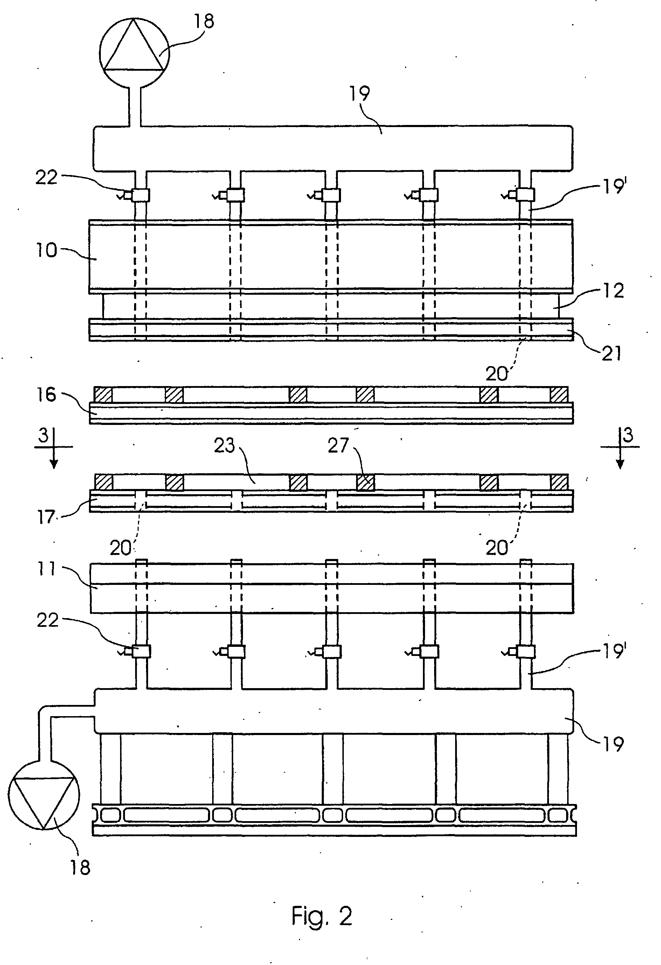

As shown in Figures 1 and 2, the apparatus according to the invention for discontinuous foaming of insulating panels substantially comprises a press of single or multiple plate type, for the production of one or more panels simultaneously.

The press substantially comprises a frame 10, a lower platen 11 which can be raised and lowered in the direction of the double arrow A, for example by means of hydraulic cylinders not shown, and an upper platen 12 fixed to the structure 10.

Two panel supporting carriages 13 and 14 are provided between the lower platen 11 and the upper platen 12 of the press, each of which can run on tracks 15, between an advanced position inside the press in which a chemically reactive foamable mixture may be injected into each panel, for example for the production of a rigid polyurethane foam, and a retracted position outside of the press, in which unloading operations of the foamed panels, and preparation for the foaming of new panels can be performed, as explained further below.

Each carriage 13 and 14 comprises in turn plate 16 and 17 respectively for supporting the panels to be foamed, which are superimposed and parallelly arranged to the platens 11 and 12 of the press.

The carriages 13 and 14 can be moved along guide tracks 15 by means of any drive system, for example by drive chains or another suitable drive device.

As is known, an insulating panel substantially comprises two spaced apart side shells defining the external walls of the panel, between which a foaming cavity is formed in which a chemically reactive foamable mixture is injected, for example a mixture suitable for forming a rigid polyurethane foam which totally fills the cavity of the panel, firmly anchoring to the two shells. The shells can be made by shaped or flat metal sheets or another suitable material, or provided with bent edges and a peripheral sealing band as well as with fitting for a tight mechanical connection between adjacent panels.

The press is also provided with an air suction system designed to generate a certain degree of vacuum in the cavity of the individual panels while during foaming.

More specifically, in the case of the double-plate press of Figures 1 and 2 a first air suction system is provided for the creation of vacuum into the panels supported by the lower carriage 14, and a second air suction system for the creation of vacuum in the panels supported by the upper carriage 13.

Each air suction system comprises a vacuum pump 18 and a manifold 19 having a plurality of suction conduits 19' which open at preset positions in the upper platen 12 and lower platen 11 respectively of the press. In particular the conduits 19' of the upper air suction system open onto the platen 12 of the press directly at air-suction zones 29 on the plate 16 of the carriage 13 as described further below, while the conduits 19' of the lower air-suction system open in the platen 11 of the press to connect sealingly to respective suction holes 20 in the panel supporting plate 17 of the lower carriage 14. In turn the suction holes 20 on the plate 17 of the lower carriage open in preset positions at air suction zones 29 as explained further below.

Each air-suction system is also provided with suitable pressure control means for controlling the degree of vacuum created in the cavities of the panels. For example comprises pressure modulating valves 22, appropriately controlled by a central control unit of the machine, to maintain the pressure inside the panels at a preset value, substantially constant, or changing pressure at several values according to a positive and/or negative pressure profile during each foaming step of the panels.

The press is connected to an apparatus for preparing and feeding a foamable mixture, comprising one or more mixing devices carried by a manipulator for the selective feeding of the mixture into the cavities of the panels, following a preset work program stored in the same control unit of the press.

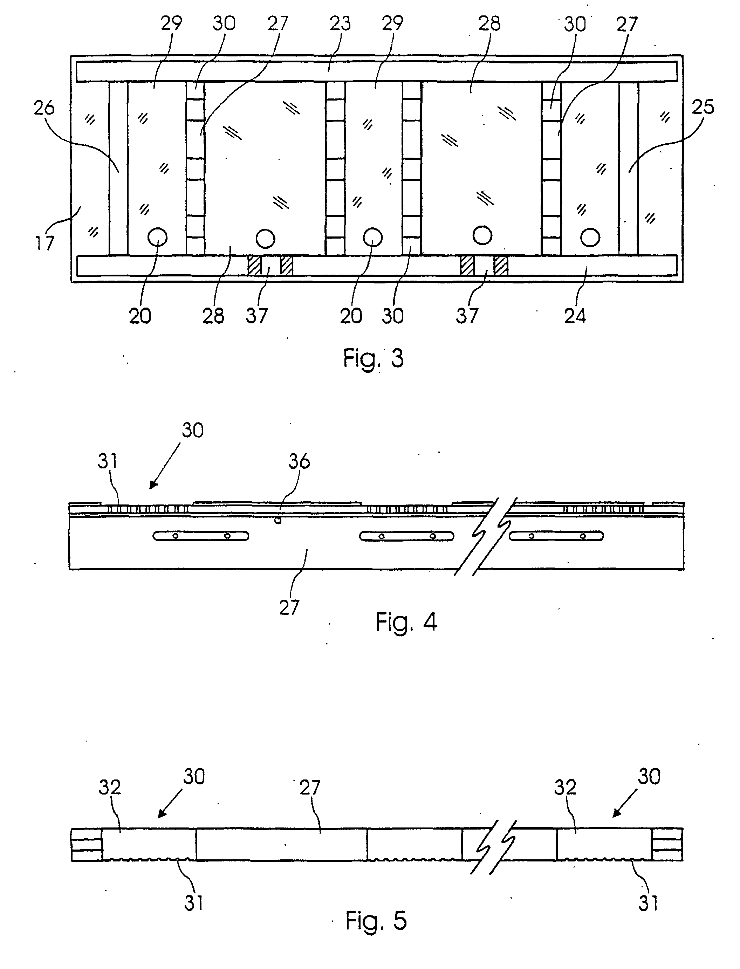

According to a first aspect of the present invention, as shown for example for the lower carriage 14 in Figure 3, each carrier-plate 16 and 17 comprises a panel supporting surface of rectangular shape which extends along a longitudinal axis of the press.

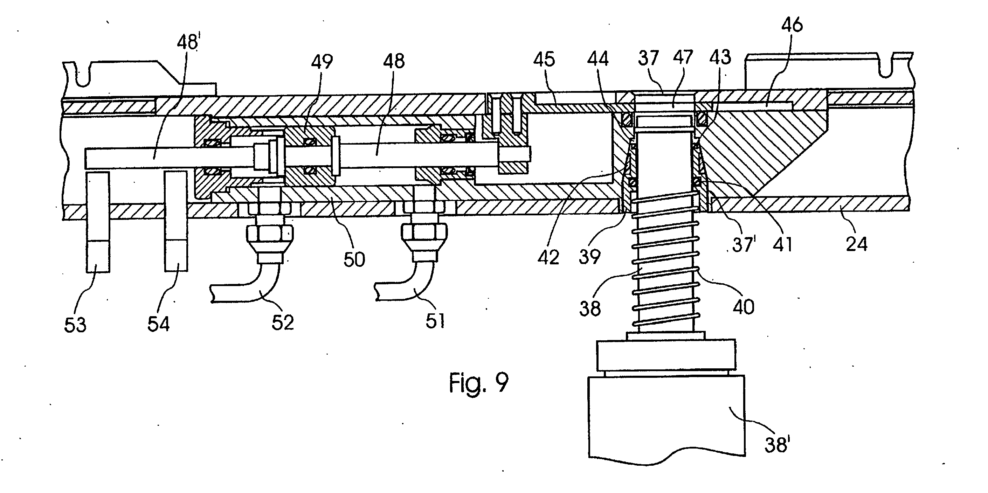

The panels supporting surface in each plate 16, 17 is encircled by a peripheral frame comprising two longitudinal frame members 23, 24 and two cross frame members 25, 26 at the respective ends of the plate, as shown in Figure 3 for the plate 17 of the lower carriage 14. The peripheral frame members 23, 24, 25 and 26 of the peripheral frame are removably fastened to the plate 16, 17 of each carriage, and one of the two longitudinal frame member, at each panel foaming zone, comprises an injection hole 37, and is provided with a special closure device, described further below with reference to Figures 9 to 15 of the accompanying drawings.

From Figure 3 it can also be seen that the air-suction holes 20 on the plate 17 of the lower carriage, and similarly the conduits 19' of the upper suction system, open in appropriately spaced apart positions in the longitudinal direction of the plates 16, 17, in order to divide the latter into a set of modular areas. Therefore it is possible to divide the panel supporting surface of each plate 16, 17 into a plurality of adjacent zones, separated one from the other by intermediate cross-frame members 27, which extend transversely to the plate of each carriage, between the longitudinal frame members 23 and 24.

The position and the space between the intermediate frame members 27 will depend on the dimensions of the panels to be manufactured and will in general vary from case to case according to production needs. The transverse intermediate cross frame members 27 are in turn attached removably to the plate 16, 17 of the carriages in order to allow removal of the foamed panels, or to modify the modular division of the of the panels foaming zones 28 and the air suction zones 29, according to the type and/or dimensions of the panels to be manufactured.

The intermediate frame members 27 can be fastened by any appropriate fastening means, not shown, for example by fast clamping devices removably attached, in appropriate holes formed in the plate of each carriage.

The use of intermediate frame members 27, according to the present invention, thus allows the surface of each plate 16 and 17 to be divided into a plurality of separate zones, comprising one or more panels foaming zones 28 and one or more air suction zones 29, wherein holes 20 or the air suction conduits 19' open.

In the case shown in Figure 3, the plate 17 comprises two panel foaming zones 28, three air suction zones 29 and a higher number of air-suction holes 20 at a preset space. Only two of the holes 20 are open in the respective air suction zones 19, while the remaining holes 20 which come within the foaming zones 28 are closed by the lower shells of the panels.

As can be seen from Figures 2 and 3, the panel foaming zones 28 and the air-suction zones are alternatively side by side arranged and separated by the intermediate frame members 27, to have an air suction zone 29 arranged on both sides of each foaming zone 28. Therefore once the platens 11 and 12 of the press have been closed against the plates 16 and 17 of the carriages, the foaming zones 28 are tightly closed to communicate with the air-suction zones 29 through restricted passages 30 for the outflow of air, provided in the cross frame members 27 near the upper surface or shell of the panels to be foamed.

For the purposes of the present description the expression "restricted passage" refers to an air suction path having at least one very small cross dimension, for example equal to or less than 1.5 mm, preferably less than 1 mm, such as to prevent any possible escape of the foam. The dimensions of the air passages may be defined on the basis of experimental tests, as a function of the current reactivity and viscosity of the chemical mixture and the vacuum degree generated in the cavity of the panels.

More specifically, as shown in the enlarged views of Figures 4 to 7, each flow passage 30 for suction of the air comprises a plurality of small grooves 31 formed on one side, near an upper edge of each frame member 27, on the side of the latter intended to face towards a foaming zone 28.

The grooves 31 for passage of the air extend vertically for a small length, for example for some ten millimetres. They also have a depth of between 1 and 1.5 mm or less and a width of a few millimetres, for example between 2 and 3.5 mm, to allow a division into small flows of air flow sucked from a foaming zone 28 towards an air suction zone 29, at the same time preventing the passage or possible escape of foam during expansion. The grooves 31 for suction of the air open frontally on the side surface of the frame member 27 and at their ends to communicate towards a peripheral groove 31' running along the frame member 27 and towards a depressed part 32 on the upper surface of the frame member 27 which come into contact with a corresponding bottom face of the upper platen 12 of the press and with a corresponding bottom face of the plate 16 of the upper carriage respectively.

In the case shown, small vertically-oriented slots 31 have been shown at three air passages 30, that is in a central position and at both ends of each cross frame member 27.

From tests carried out, this arrangement has proved to be particularly appropriate and effective in that it creates distributed suction of air which further improve the distribution of the foam in the zones of the panel cavities far from the injection point of the mixture, particularly along the peripheral edges of the panel.

As shown, the slots 31 are positioned near the upper edge of the frame member 27, in that it assist in the outflowing of the air, and in that it has proved to be suitable for acting as a stop for the foam, preventing escape thereof towards the suction zones. The air suction passages are provided in the high position of the panel on the carriage, very close to the upper surface of the panel itself. Therefore any escape of the mixture in the liquid state is prevented when it is injected and poured on the lower shell. Moreover, when the foam which develops and rise in the cavity of the panel arrives in proximity of the suction grooves, it already has high density, that is to say as an already formed cellular structure, which makes the passage of the foam through the small grooves 31 difficult if not impossible. Finally the front opening of the grooves 31 in practice makes the entire system "self-cleaning" in that any drips of foam which may remain in the grooves 31 are automatically eliminated with the removal of the panel.

However the air suction passages could also be differently arranged and formed at the upper edges of the cross frame members 27, in respect to the grooves 31, previously shown.

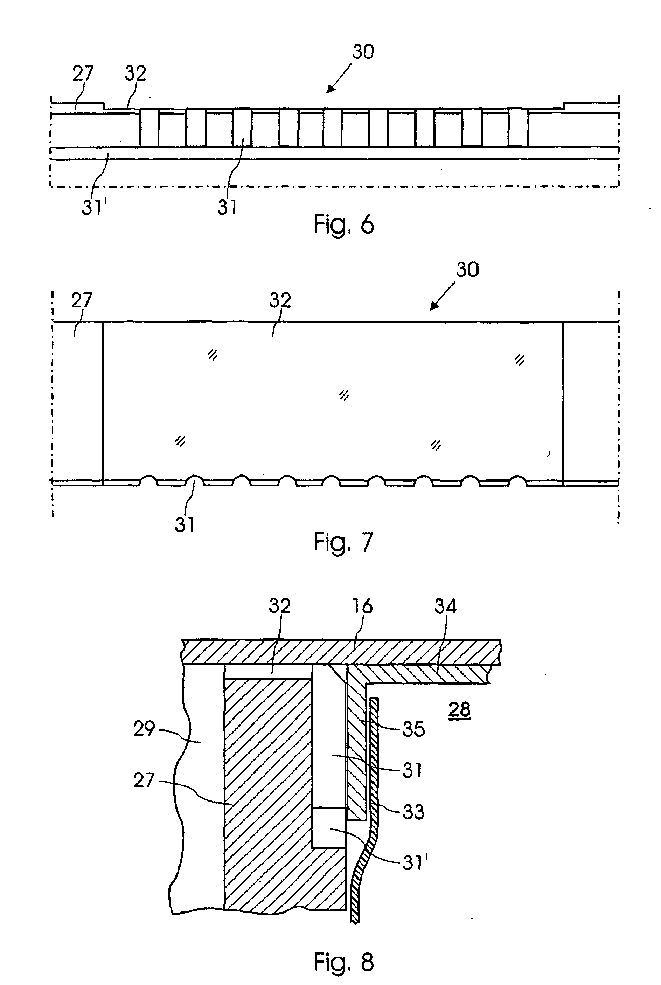

The enlarged detail of Figure 8 shows the case relating to the manufacturing of an insulating panel with a peripheral sealing band 33 inside the panel.

More specifically, reference 34 in Figure 8 denotes part of the upper shell of a panel, with a bent edge 35 which is arranged frontally against the grooves 31. The edge 35 of the upper shell, in a position slightly below the grooves 31, is supported by pins 36.

Pins 36 project slightly from the surface of the frame member 27 in order to fold the upper edge of the sealing band 33 slightly forwards, moving it away from the edge 35 of the shell 34. In this way an outflow of air is permitted from the zone 28 towards the zone 29, through the slot 31', the small grooves 31 and the depressed part 32 on the upper surface of the same cross frame member 27.

As mentioned initially, a further feature of the invention consists of the possibility of controlling the vacuum inside each foaming zone, avoiding sudden pressure drops or changes both at the start and end of each foaming step, when the injection sleeve 38 of a mixing device 38' is introduced and respectively removed from the injection hole 37.

One of the longitudinal frame member 24, at each foaming zone 28 is therefore provided with an injection hole 37 for the selective feeding of a foamable mixture, in each panel, as referred previously.

In this respect, as shown in the enlarged view of Figure 9, at each injection hole 37, a closure device has been provided comprising a sliding valve inside the frame member 24. This closure device, together with a sliding plug on the injection sleeve 38 of the mixing device 38', contributes to sealingly close the panel foaming zone 28.

More specifically the injection sleeve 38 is provided with a sliding plug 39 having a substantially conical shape, which penetrates sealingly a corresponding conical portion 37' of the injection hole 37.

The plug 39 is pushed forwards by a helical spring 40 provided on the same sleeve 38, as explained further below.

The plug 39 in turn has an internal gasket 41 to form a seal against the cylindrical surface of the sleeve 38, and comprises an external gasket 42 designed to form a seal against the internal cone surface of the injection hole.

The plug 39 finally comprises a third front gasket 43 to form a seal against an annular shoulder 44 for stopping the plug inside the injection hole 37.

The closure system is completed by a sliding valve inside the frame member 24. This valve comprises a sliding plate 45 on the side of the frame member 24 facing the panel cavity, that is to say on the side opposite that of insertion of the injection sleeve 38, which plate 45 slides sealingly in a longitudinal guide 46.

Near one of its ends, the plate 45 has a hole 47 for passage of the sleeve 38, which in the retracted position of the plate 45 is aligned with the injection hole 37. The other end of the plate 45 is attached to the rod 48 of the piston 49 of a double-acting hydraulic cylinder 50 inside the frame member 24. References 51 and 52 in Figure 9 denote the two conduits for feeding and discharge a pressurised fluid into the chamber of the cylinder 50.

The rod 48 of the piston, on the side opposite the one for connection to the plate 45, extends with a part 48' for actuation of two proximity switches 53, 54, which supply control signals indicative the open and closed condition of the valve 45, for the operative cycle of the entire apparatus.

The method according to the invention and the working mode of the entire apparatus will be described hereinbelow with reference to Figures 1 to 8, and Figures 9 to 15 which show different condition of the closure device for the injection hole, during an injection step.

In the case of Figures 1 and 2 an apparatus has been shown comprising a press, with a bridge structure, in which the tracks 15 for the carriages 13 and 14 extend towards the exterior at both ends of the press. In this way it is possible to provide the apparatus with four carriages, of which an upper carriage and a lower carriage, each time, are outside on the opposite sides of the press for removal of the foamed panels and for the preparation of new panels, while the other two upper and lower carriages are closed in the press for a foaming cycle.

Having completed a foaming cycle the press is opened, the carriages with the newly foamed panels are moved outside from the opposite sides of the press and the other two carriages are advanced and closed between the platens of the press for a new foaming cycle.

As soon as the new carriages moved into the press, raising of the lower plate 11 is started and which, after a short upward stroke, will raise the plate 17 of the lower carriage. Simultaneously the suction holes 20 of the plate 17 will connect sealingly to the hoses 19' of the lower suction system.

Continuing the upward movement of the lower platen 11, with the lower carriage 14, the peripheral frame of the plate 17 will contact the bottom surface of the plate 16 of the upper carriage which, in this way, will close the foaming zones 28 and the suction zones 29 on the lower plate 17.

The raising movement of the lower press-platen will continue further until the peripheral frame of the upper plate 16 will brought in contact with the bottom surface of the fixed press-platen 12, strongly tightening the plates 16 and 17 to close, sealingly, between the two platens 11 and 12 of the press.

At this point it is possible to start a selective foaming cycle for the various panels.

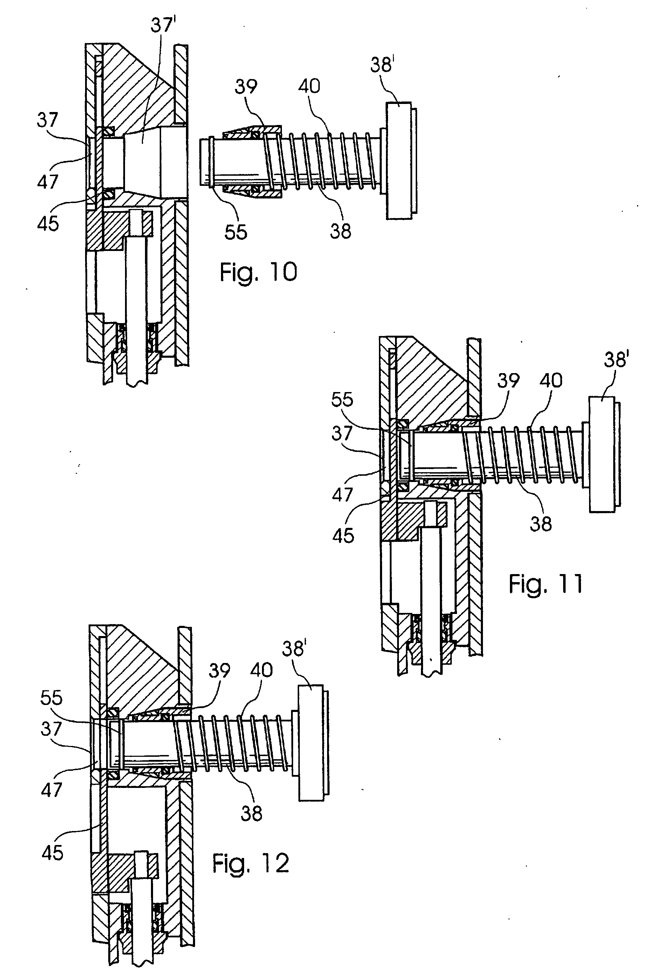

At the start of each cycle the mixing device 38' is in the position of Figure 10 in which the sleeve 38 is retracted outside and in a condition aligned with the injection hole 37, while the plug 39 is pushed completely forwards by the spring 40, against a stop shoulder 55 near the front end of the same injection sleeve 38.

In these conditions the plate 45 is moved totally retracted with its hole 47 aligned to the injection hole 37.

Having now to perform the injection of the reactive polyurethane forming mixture into the cavity of a panel, a certain vacuum degree has initially to be created, with vacuum!value for example between 180 and 250 mbar, to suck the air from the panel cavity and to facilitate subsequent distribution of the injected polyurethane foam.

Therefore, before connecting to the vacuum source 18 the two suction zones 29 at the two opposite ends of the foaming cavity 28, the injection hole 37 is closed on the side facing the cavity of the panel, by advancing the plate 45, as shown in Figure 10. The, suction zones 29 are connected to the vacuum source and subsequently the foaming device 38' is moved towards the member 24 of the frame, to introduce a certain length of the injection sleeve 38 into the injection hole 37 until the plug 39 is sealingly pushed against the conical part 35', biasing the spring 40 slightly. This condition is shown in Figure 11. The two sensing devices 54 and 55 will at this point supply a control signal, enabling prosecution of the foaming cycle. The vacuum is controlled maintained at a constant value by the modulating valves 22.

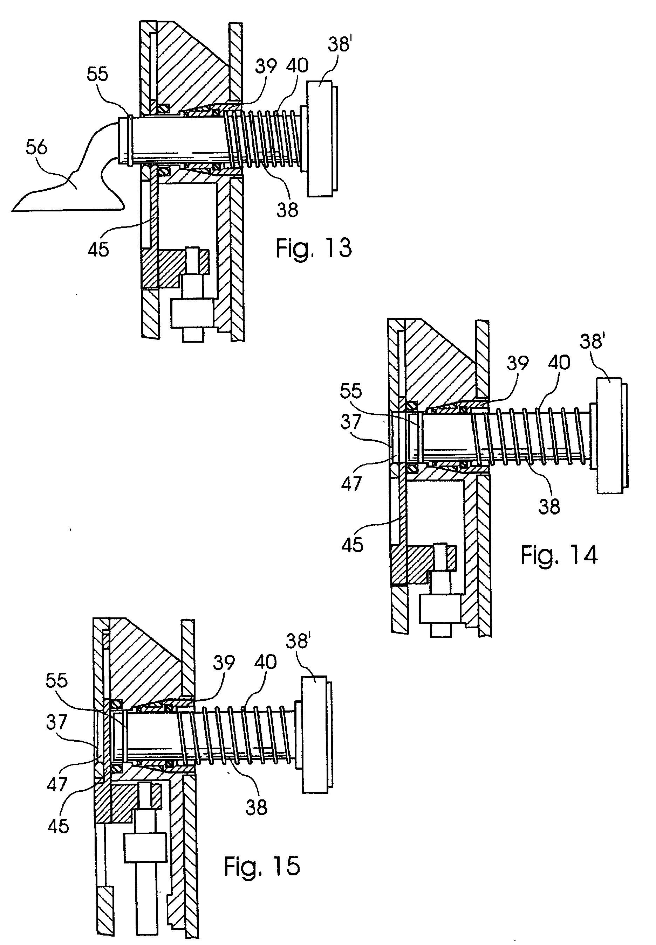

Once the required vacuum degree has been reached, the injection hole is opened, moving the plate 45 backwards, as shown in Figure 12, and then the subsequent injection step of the foamable mixture is performed, maintaining suction. This step is shown in Figure 13 where it can be seen that the plate 45 has made to move backwards, while the injection sleeve 38 has moved further forwards to penetrate the cavity of the panel and supply a metered quantity of the foamable mixture 56.

The vacuum in the cavity of the panel is maintained for all the time required for allowing total filling with the foam of the cavity of the panel. During this step the foam will rise in the cavity of the panel until it reaches the upper shell. However, given the position and configuration of the air passages 31, the foam will not be able to escape since it is restrained both by the presence of the peripheral band 33, in the case wherein this sealing band is present, and by the same configuration and arrangement of the narrow passages for suction of the air.

Having ended injection, the mixing device 38' with the injection sleeve 38 will once again be made to move backwards into the condition of Figure 14, always maintaining the plug 39 tightly urged against the inside surface of the injection hole. Then the plate 45 will be made to move forwards to close once again the injection hole 37. This condition is shown in Figure 15.

At this point the injection sleeve 38 can be fully removed and the mixing device 38' made to return to the position of Figure 10 for a new injection cycle in another panel.

A number of tests have been carried out using a preformulated polyurethane mixture, comparing the results obtained with the vacuum foaming method and apparatus according to the invention, with the results obtained without vacuum. In the first case the operation was performed with a vacuum value of approximately 200 mbar, foaming panels having a length of 3200 mm, of 2370 mm width, and 60 mm tickness. The vacuum was started before the injection of the mixture and was maintained for approximately 2 minutes after the end of injection.

Comparative data have demonstrated the superior quality of the foamed panels according to the invention. In particular the adherence of the foam to the shells was 140 KPa compared to the 100 KPa of a conventional panel. The compression strength was 160 KPa versus the 120 KPa of the conventional panel, while the core density was between 36 and 38 kg.

The results from the environmental viewpoint were particularly interesting. The work environment was kept perfectly clean in that the leaks of foam of the traditional systems were totally absent, and in that the volatile substances were prevented from dispersing in the surrounding area.

The intent is that the results referred above are only an indication of the features of the panels obtained, and that what has been said with reference to the accompanying drawings has to be considered as simply a non-limiting illustration of the general features of the method and apparatus claimed.

## Claims

1. Method for the vacuum foaming of thermally insulating panels having two spaced apart side shells defining a foaming cavity, on at least one carrier (13, 16; 14, 17) provided between upper and lower longitudinal platens (11, 12) of a press (10), said platens (11, 12) being movable one towards the other between an open position, in which the carrier (13, 14) for the panels can freely be moved between the platens (11, 12), and a closed position in which the carrier (13, 14) and the shells are clamped between the platens (11, 12) of the press (10), said carrier (13, 14) comprising a plate (16, 17) defining a rectangular horizontal panel supporting surface encircled by a peripheral frame (23, 24, 25, 26) having side frame members which extend longitudinally (23, 24) and crosswise (25, 26) to the longitudinal platens (11, 12) of the press (10), the method comprising the steps of:
dividing the volume defined by the panel supporting surface and the peripheral frame of the carrier (13, 14), into a plurality of side by side arranged zones (28, 29), by positioning spaced-apart intermediate cross-frame members (27) extending parallely to each other and crosswise to the supporting surface between the longitudinal frame members (23, 24) of the peripheral frame (23, 24, 25, 26), said zones (28, 29) comprising at least one foaming cavity (28), and air-suction zones (29) at opposite ends of the foaming cavity (28) ;
providing the intermediate cross frame members (27) with restricted air-suction passages (30) near the upper surface of the foaming cavity, to communicate the foaming cavity (28) with the air-suction zones (29) through said air-suction passages (30);
generating a vacuum in the foaming cavity by sucking air from the foaming cavity (28) through said restricted air passages (30), and into the air-suction zones (29);
injecting the foamable mixture (56) in the foaming cavity while maintaining pressure controlled conditions in said foaming cavity, and
allowing the foamable mixture to expand and to totally fill the foaming cavity while maintaining the suction of the air.

2. Method according to claim 1, **characterised in that** vacuum is generated by continuously sucking the air from the foaming cavity (28) into the air-suction zones (29) by dividing the sucked air flow through a plurality of grooves (31).

3. Method according to claim 1, **characterised by** maintaining the vacuum during injection of the mixture, for at least part of the foam expansion step.

4. Method according to claim 1, **characterised by** maintaining vacuum at a constant value between 180 and 250 mbar.

5. Apparatus for the vacuum foaming of thermally insulating panels having two spaced apart side shells defining a foaming cavity into which a foamable mixture is injected to totally fill the foaming cavity with foamed material, the apparatus comprising:
a press (10) having upper and lower longitudinal platens (11, 12) movable one in relation to the other between an open and a closed condition;
at least one carrier (13, 14) comprising a plate (16, 17) defining a rectangular horizontal panel supporting surface, said carrier (13, 14), being movable between a backward position for removal and preparation of panels, and a forward position for foaming the panels while the shells are clamped between the closed platens (11, 12) of the press;
said carrier (13, 14) further comprising a peripheral frame (23, 24, 25, 26) having frame members extending longitudinally (23, 24) and crosswise (25, 26) to the longitudinal platens (11, 12) of the press (10) and air-suction means (19, 20) for vacuum generation into the volume defined by the panel supporting surface and the peripheral frame of the carrier (13, 14), the apparatus being **characterised by** :
a plurality of spaced apart intermediate cross frame members (27) extending parallely to each other and crosswise to the panel supporting surface between the longitudinal frame members (23, 24) of the peripheral frame (23, 24, 25, 26), to divide the volume defined by the panel supporting surface and the peripheral frame of the carrier (13, 14) into a plurality of side by side arranged zones (28, 29) comprising at least one foaming cavity (28) and air-suction zones (29) at opposite ends of the foaming cavity (28);
each intermediate frame member (27) having a plurality of restricted air flow passages (30) which extend between the foaming cavity (28) and the air-suction zones (29), close to the upper surface of foaming cavity (28); and by
air-suction means (18, 19, 19', 20) connectable to said air suction zones (29) by suction conduits (19') extending through the platens (11, 12), in the closed condition of the press (10).

6. Apparatus according to claim 5, **characterised in that** the air suction passages (30) comprise a plurality of air suction grooves (31) to divide the air flow, opening on the side of the cross frame members (27) facing the foaming cavity (28).

7. Apparatus according to claim 5, **characterised by** comprising disengageable locking means, for removably fastening each frame member (23, 24, 25, 26, 27) to the panel supporting plate (16, 17).

8. Apparatus according to claim 5, **characterised by** comprising superimposed first and second carriers (14, 15) each provided with a panel supporting plate (16, 17), and independent air suction means (18, 19, 19', 20) connectable to the air-suction zones of each supporting plate (16, 17) clamped between the platens (11, 12) of the press (10).

9. Apparatus according to claim 5, **characterised in that** said panel supporting plate (16, 17) comprises a plurality of spaced apart air-suction holes (20), on at least one side of said panel supporting plate (16, 17).

10. Apparatus according to claim 5, comprising a mixing device (38) provided with an injection sleeve (38) for selectively supplying a foamable mixture into a plurality of foaming cavities (28), and in which one of said longitudinal members (23, 24) of the peripheral frame is provided with an injection hole (37) at each foaming cavity (28), **characterised by** comprising an automatically actuable closure device (39, 45) for closing each injection hole (37), said closure device comprising a plug-shaped member (39), slidingly supported by the injection sleeve (38), and biasing means (40) to push forward said plug member (39) in respect to said injection sleeve (38).

11. Apparatus according to claim 10, **characterised in that** said plug member (39) comprises sealing means (41, 43), to tightly close the injection hole (37) upon insertion of the injection sleeve (38).

12. Apparatus according to claim 10, **characterised in that** said closure device (39, 45) comprises a sliding valve (45) on the side of the injection hole (37) facing the panel foaming cavity (28).

13. Apparatus according to claim 12, **characterised in that** said sliding valve comprises a closure plate (45) having a passing through hole (47) for the injection sleeve (38), drive and guide means (46, 50) being provided to move the sliding plate (45) between a closed and an open condition of the injection hole (37).

14. Apparatus according to claim 13, **characterised in that** the drive means comprise a linear actuator (50), and sensing means (53, 54) to provide control signals in the backward and in the forward positions of the sliding plate (35).

## Patentansprüche

1. Verfahren zum Unterdruck-Aufschäumen von thermisch isolierenden Dämmplatten mit zwei auf Abstand zueinander befindlichen Schalen, die einen Aufschäumhohlraum definieren, auf wenigstens einem Träger (13, 16; 14, 17), der zwischen einer oberen und einer unteren längsverlaufenden Pressenplatte (11, 12) einer Presse (10) vorgesehen ist, wobei die Pressenplatten (11, 12) aufeinander zu zwischen einer geöffneten Stellung, in der die Träger (13, 14) für die Dämmplatten frei zwischen den Pressenplatten (11, 12) bewegt werden können, und einer geschlossenen Stellung beweglich sind, in der die Träger (13, 14) und die Schalen zwischen den Pressenplatten (11, 12) der Presse (10) eingeklemmt sind, wobei der Träger (13, 14) eine Platte (16, 17) aufweist, die eine rechteckige, horizontale, eine Dämmplatte tragende Oberfläche definiert, die von einem Umfangsrahmen (23, 24, 25, 26) umgeben ist, der Rahmenseitenteile hat, die in Längsrichtung (23, 24) und in Querrichtung (25, 26) zu den längsverlaufenden Pressenplatten (11, 12) der Presse (10) verlaufen, wobei bei dem Verfahren:
das Volumen, das durch die die Dämmplatte tragende Oberfläche und den Umfangsrahmen des Trägers (13, 14) definiert wird, in eine Vielzahl von Seite an Seite angeordneten Zonen (28, 29) unterteilt wird, indem mittlere Querrahmenteile (27), die parallel zueinander und quer zu der Trägerfläche verlaufen, zwischen den längsverlaufenden Rahmenteilen (23, 24) des Umfangsrahmens (23, 24, 25, 26) auf Abstand zueinander positioniert werden, wobei die Zonen (28, 29) wenigstens einen Aufschäumhohlraum (28) und Luftsaugzonen (29) an gegenüberliegenden Enden des Aufschäumhohlraums (28) aufweisen;
die mittleren Querrahmenteile (27) mit eingeschränkten Luftsaugdurchgängen (30) nahe der oberen Oberfläche des Aufschäumhohlraums vorgesehen sind, um den Aufschäumhohlraum (28) mit den Luftsaugzonen (29) durch die Luftsaugdurchgänge (30) in Verbindung zu bringen;
ein Unterdruck in dem Aufschäumhohlraum erzeugt wird, indem Luft aus dem Aufschäumhohlraum (28) durch die eingeschränkten Luftdurchgänge (30) und in die Luftsaugzonen (29) angesaugt wird;
das schäumbare Gemisch (56) in den Aufschäumhohlraum eingespritzt wird, während die druckgesteuerten Bedingungen in dem Aufschäumhohlraum aufrechterhalten werden, und
das schäumbare Gemisch expandieren gelassen und den Aufschäumhohlraum vollständig auffüllen gelassen wird, während das Ansaugen der Luft fortgesetzt wird.

2. Verfahren nach Anspruch 1, **dadurch gekennzeichnet, daß** der Unterdruck erzeugt wird, indem kontinuierlich Luft aus dem Aufschäumhohlraum (28) in die Luftsaugzonen (29) durch Unterteilen des angesaugten Luftstroms durch eine Vielzahl von Kanälen (31) angesaugt wird.

3. Verfahren nach Anspruch 1, **dadurch gekennzeichnet, daß** der Unterdruck während des Einspritzens des Gemisches für wenigstens einen Teil des Schaumexpansionsschrittes aufrechterhalten wird.

4. Verfahren nach Anspruch 1, **dadurch gekennzeichnet, daß** der Unterdruck auf einem konstanten Wert zwischen 180 und 250 mbar aufrechterhalten wird.

5. Vorrichtung zum Unterdruck-Aufschäumen von thermisch isolierenden Dämmplatten mit zwei auf Abstand zueinander liegenden Seitenschalen, die einen Aufschäumhohlraum definieren, in den ein schäumbares Gemisch eingespritzt wird, um den Aufschäumhohlraum vollständig mit geschäumten Material zu füllen, wobei die Vorrichtung aufweist:
eine Presse (10) mit einer oberen und einer unteren längsverlaufenden Pressenplatte (11, 12), die in bezug zueinander zwischen einer offenen und einer geschlossenen Stellung beweglich sind;
wenigstens einen Träger (13, 14), der eine Platte (16, 17) aufweist, die eine rechteckige, horizontale, eine Dämmplatte tragende Oberfläche definiert, wobei der Träger (13, 14) zwischen einer hinteren Stellung zum Entfernen und Vorbereiten von Dämmplatten und einer vorderen Stellung zum Aufschäumen der Dämmplatten beweglich ist, während die Schalen zwischen den geschlossenen Pressenplatten (11, 12) der Presse eingeklemmt sind;
wobei der Träger (13, 14) weiter einen Umfangsrahmen (23, 24, 25, 26), der in Längsrichtung (23, 24) und in Querrichtung (25, 26) zu den längsverlaufenden Platten (11, 12) der Presse (10) verlaufende Rahmenteile hat, und Luftansaugmittel (19, 20) zum Erzeugen von Unterdruck in dem Volumen aufweist, das durch die die Dämmplatte tragende Oberfläche und den Umfangsrahmen des Trägers (13, 14) definiert ist, wobei die Vorrichtung **gekennzeichnet ist durch**:
eine Vielzahl von in Abstand zueinander liegenden mittleren Querrahmenteilen (27), die parallel zueinander und in Querrichtung zu der die Dämmplatte tragenden Oberfläche zwischen den in Längsrichtung verlaufenden Rahmenteilen (23, 24) des Umfangsrahmens (23, 24, 25, 26) verlaufen, um das Volumen, das **durch** die die Dämmplatte tragende Oberfläche und den Umfangsrahmen des Trägers (13, 14) definiert ist, in eine Vielzahl von Seite an Seite angeordneten Zonen (28, 29) zu unterteilen, die wenigstens einen Aufschäumhohlraum (28) und Luftsaugzonen (29) an gegenüberliegenden Enden des Aufschäumhohlraums (28) aufweisen;
wobei jedes mittlere Rahmenteil (27) eine Mehrzahl von eingeschränkten Luftstromdurchgängen (30) hat, die zwischen dem Aufschäumhohlraum (28) und den Luftsaugzonen (29), nahe an der oberen Oberfläche des Aufschäumhohlraums (28) verlaufen; und **durch**
Luftsaugmittel (18, 19, 19', 20), die mit den Luftsaugzonen (29) **durch** Saugleitungen (19'), die sich **durch** die Pressenplatten (11, 12), in der geschlossenen Stellung der Presse (10), erstrecken, verbindbar sind.

6. Vorrichtung nach Anspruch 5, **dadurch gekennzeichnet, daß** die Luftsaugdurchgänge (30) eine Mehrzahl von Luftsaugkanälen (31) aufweisen, um den Luftstrom aufzuteilen, wobei die Luftsaugkanäle (31) sich an der Seite der Querrahmenteile (27), die dem Aufschäumhohlraum (28) zugewandt ist, öffnen.

7. Vorrichtung nach Anspruch 5, **dadurch gekennzeichnet, daß** sie lösbare Befestigungseinrichtungen aufweist, um jedes Rahmenteil (23, 24, 25, 26, 27) lösbar an der die Dämmplatte tragenden Platte (16, 17) zu befestigen.

8. Vorrichtung nach Anspruch 5, **dadurch gekennzeichnet, daß** sie übereinanderliegende erste und zweite Träger (14, 15) aufweist, von denen jeder mit einer eine Dämmplatte tragenden Platte (16, 17) und unabhängigen Luftsaugmitteln (18, 19, 19', 20) versehen ist, die mit den Luftsaugzonen jeder tragenden Platte (16, 17) verbindbar sind, die zwischen den Pressenplatten (11, 12) der Presse eingeklemmt sind.

9. Vorrichtung nach Anspruch 5, **dadurch gekennzeichnet, daß** die die Dämmplatte tragende Platte (16, 17) eine Mehrzahl von auf Abstand zueinander liegenden Luftsauglöchern (20) an wenigstens einer Seite der die Dämmplatte tragenden Platte (16, 17) aufweist.

10. Vorrichtung nach Anspruch 5 mit einer Mischeinrichtung (38), die mit einer Einspritzdüse (38) versehen ist, um selektiv ein schäumbares Gemisch in eine Vielzahl von Schaumhohlräumen (28) zu fördern, und in der eines der in Längsrichtung verlaufenden Teile (23, 24) des Umfangsrahmens mit einem Einspritzloch (37) an jedem Aufschäumhohlraum (28) versehen ist, **dadurch gekennzeichnet, daß** sie eine automatisch zu betätigende Verschlußeinrichtung (39, 45) aufweist, um jedes Einspritzloch (37) zu schließen, wobei die Verschlußeinrichtung ein stopfenförmiges Teil (39), das gleitfähig von der Einspritzdüse (38) getragen wird, und Vorspannmittel (40) aufweist, um das Stopfenteil (39) in bezug auf die Einspritzdüse (38) nach vorne zu drücken.

11. Vorrichtung nach Anspruch 10, **dadurch gekennzeichnet, daß** das Stopfenteil (39) Dichtungsmittel (41, 43) aufweist, um das Einspritzloch (37) beim Einsetzen der Einspritzdüse (38) dicht zu verschließen.

12. Vorrichtung nach Anspruch 10, **dadurch gekennzeichnet, daß** die Verschlußeinrichtung (39, 45) ein Schieberventil (45) auf der Seite des Einspritzlochs (37) hat, die dem Dämmplattenaufschäumhohlraum (28) zugewandt ist.

13. Vorrichtung nach Anspruch 12, **dadurch gekennzeichnet, daß** das Schieberventil eine Verschlußplatte (45) mit einem durchgehenden Loch (47) für die Einspritzdüse (38), Antriebs- und Führungsmittel (46, 50) aufweist, die vorgesehen sind, um die Schieberplatte (45) zwischen einer geschlossenen und einer offenen Stellung des Einspritzloches (37) zu bewegen.

14. Vorrichtung nach Anspruch 13, **dadurch gekennzeichnet, daß** die Antriebsmittel ein Linearstellglied (50) und Sensormittel (53, 54) aufweisen, um Steuersignale in der hinteren und der vorderen Position der Schieberplatte (35) zu liefern.

## Revendications

1. Procédé de moussage sous vide des panneaux d'isolation thermique comportant deux coques latérales distantes définissant une cavité de moussage, sur au moins un support (13,16;14,17) prévu entre des plateaux longitudinaux supérieur et inférieur (11,12) d'une presse (10), lesdits plateaux (11,12) étant déplaçables l'un vers l'autre entre une position ouverte, dans laquelle le support (13,14) pour les panneaux peut être déplacé librement entre les plateaux (11,12), et une position fermée, dans laquelle le support (13,14) et les coques sont serrés entre les plateaux (11,12) de la presse (10), ledit support (13,14) comprenant une plaque (16,17) définissant une surface horizontale rectangulaire de support de panneau, entourée par un cadre périphérique (23,24,25,26) comportant des éléments de cadre latéraux, qui s'étendent longitudinalement (23,24) et transversalement (25,26) par rapport aux plateaux longitudinaux (11,12) de la presse (10), le procédé comprenant les étapes consistant à :
diviser le volume défini par la surface de support de panneau et le cadre périphérique du support (13,14) en une pluralité de zones (28,29) disposées côte-à-côte, par positionnement d'éléments de cadre transversaux intermédiaires espacés (27) qui s'étendent parallèlement entre eux et transversalement par rapport à la surface de support entre les éléments de cadre longitudinaux (23,24) du cadre périphérique (23,24,25,26), lesdites zones (28,29) comprenant au moins une cavité de moussage (28) et des zones d'aspiration d'air (29) sur des extrémités opposées de la cavité de moussage (28);
équiper les éléments de cadre transversaux intermédiaires (27) de passages limités d'aspiration d'air (30) à proximité de la surface supérieure de la cavité de moussage, pour mettre en communication la cavité de moussage (28) avec les zones d'aspiration d'air (29) à travers lesdits passages d'aspiration d'air (30) ;
produire un vide dans la cavité de moussage par aspiration de l'air à partir de la cavité de moussage (28) à travers lesdits passages d'air limités (30), et dans les zones d'aspiration d'air (29);
injecter le mélange apte à mousser (56) dans la cavité de moussage tout en maintenant des conditions de pression commandées dans ladite cavité de moussage, et
amener le mélange apte à mousser à se dilater et remplir totalement la cavité de moussage tout en conservant l'aspiration de l'air.

2. Procédé selon la revendication 1, **caractérisé en ce qu'**un vide est produit par l'aspiration continue de l'air à partir de la cavité de moussage (28) vers les zones d'aspiration de l'air (29) par division de l'écoulement d'air aspiré au moyen d'une pluralité de rainures (31).

3. Procédé selon la revendication 1, **caractérisé par** le maintien du vide pendant l'injection du mélange, pendant au moins une partie de l'étape de dilatation de la mousse.

4. Procédé selon la revendication 1, **caractérisé par** le maintien d'un vide à une valeur constante entre 180 et 250 mbars.

5. Dispositif pour le moussage sous vide de panneaux d'isolation thermique comportant deux coques latérales espacées définissant une cavité de moussage dans laquelle un mélange apte à mousser est injecté de manière à remplir totalement la cavité de moussage avec un matériau mis sous forme de mousse, le dispositif comprenant :
une presse (10) possédant des plateaux supérieur et inférieur longitudinaux (11,12) déplaçables l'un par rapport à l'autre entre un état ouvert et un état fermé;
au moins un support (13,14) comprenant une plaque (16,17) définissant une surface horizontale rectangulaire de support du panneau, ledit support (13,14) étant déplaçable entre une position arrière permettant le retrait et la préparation de panneaux et une position avant permettant le moussage des panneaux alors que les coques sont serrées entre les plateaux fermés (11,12) de la presse;
ledit support (13,14) comprenant en outre un cadre périphérique (23,24,25,26) comprenant des éléments de cadre qui s'étendent longitudinalement (23,24) et transversalement (25,26) par rapport aux plateaux longitudinaux (11,12) de la presse (10); et des moyens d'aspiration d'air (19,20) pour produire un vide dans le volume défini par la surface de support de panneau et le cadre périphérique de support (13,14),
le dispositif étant **caractérisé par** :
une pluralité d'éléments de cadre transversaux intermédiaires espacés (27) s'étendant parallèlement entre eux et transversalement par rapport à la surface de support de panneau, entre les éléments de cadre longitudinaux (23,24) du cadre périphérique (23,24,25,26) pour diviser le volume défini par la surface de support de panneau et le cadre périphérique du support (13,14) en une pluralité de zones (28,29) disposées côte-à-côte et comprenant au moins une cavité de moussage (28) et des zones d'aspiration d'air (29) sur des extrémités opposées de la cavité de moussage (28) ;
chaque élément de cadre intermédiaire (27) possédant une pluralité de passages limités de circulation d'air (30), qui s'étendent entre la cavité de moussage (28) et les zones d'aspiration d'air (29), à proximité de la surface supérieure de la cavité de moussage (28); et par
des moyens d'aspiration d'air (18,19,19',20) pouvant être raccordés auxdites zones d'aspiration d'air (29) par des conduits d'aspiration (19') qui traversent les plateaux (11,12), lorsque la presse (10) est à l'état fermé.

6. Dispositif selon la revendication 5, **caractérisé en ce que** les passages d'aspiration d'air (30) comprennent une pluralité de rainures d'aspiration d'air (31) adaptés pour diviser la circulation d'air, qui s'ouvrent sur le côté des éléments de cadre transversaux (27) tourné vers la cavité de moussage (28).

7. Dispositif selon la revendication 5, **caractérisé en ce qu'**il comprend des moyens de blocage pouvant être désenclenchés, pour la fixation amovible de chaque élément de cadre (23,24,25,26,27) à la plaque (16,17) de support de panneau.

8. Dispositif selon la revendication 5, **caractérisé en ce qu'**il comprend des premier et second supports superposés (14,15) pourvus chacun d'une plaque (16, 17) de support de panneau et des moyens d'aspiration d'air indépendants (18,19,19',20) pouvant être raccordés aux zones d'aspiration d'air de chaque plaque de support (16,17) serrée entre les plateaux (11,12) de la presse (10).

9. Dispositif selon la revendication 5, **caractérisé en ce que** ladite plaque (16,17) de support de panneau comprend une pluralité de trous d'aspiration d'air espacés (20), sur au moins un côté de ladite plaque (16,17) de support de panneau.

10. Dispositif selon la revendication 5, comprenant un dispositif de mélange (38) pourvu d'un manchon d'injection (38) pour envoyer sélectivement un mélange pouvant être mis sous forme de mousse dans une pluralité de cavités de moussage (28), et dans lequel l'un desdits éléments longitudinaux (23,24) du cadre périphérique est pourvu d'un trou d'injection (37) au niveau de chaque cavité de moussage (28), **caractérisé en ce qu'**il comprend un dispositif de fermeture (39,45) pouvant être actionné de façon automatique pour fermer chaque trou d'injection (37), ledit dispositif de fermeture comprenant un élément en forme de bouchon (39), supporté de manière à pouvoir glisser par le manchon d'injection (38) et des moyens de sollicitation (40) pour repousser en avant ledit élément de bouchon (39) par rapport audit manchon d'injection (38).

11. Dispositif selon la revendication 10, **caractérisé en ce que** ledit élément de bouchon (39) comprend des moyens d'étanchéité (41,43) adaptés pour fermer de façon étanche le trou d'injection (37) lors de l'insertion du manchon d'injection (38).

12. Dispositif selon la revendication 10, **caractérisé en ce que** ledit dispositif de fermeture (39,45) comprend une soupape coulissante (45) sur le côté du trou d'injection (37) tourné vers la cavité (28) de moussage du panneau.

13. Dispositif selon la revendication 12, **caractérisé en ce que** ladite soupape coulissante comprend une plaque de fermeture (45) possédant un trou traversant (47) pour le manchon d'injection (38), des moyens d'entraînement et de guidage (46,50) étant prévus de manière à déplacer la plaque coulissante (45) entre un état fermé et un état ouvert du trou d'injection (37).

14. Dispositif selon la revendication 13, **caractérisé en ce que** les moyens d'entraînement comprennent un actionneur linéaire (50) et des moyens de détection (53,54) pour produire des signaux de commande dans les positions arrière et avant de la plaque coulissante (35).
